# EUROPÄISCHE PATENTSCHRIFT

(11) **EP 3 816 382 B1**
(45) Veröffentlichungstag und Bekanntmachung des Hinweises auf die Patenterteilung: **03.04.2024**
(21) Anmeldenummer: 20200252.3
(22) Anmeldetag: 06.10.2020
(51) Int. Cl.: E05D 15/06, F16B 5/06, E05D 5/02

(54) **KLEMMVORRICHTUNG FÜR EINEN TÜRFLÜGEL**
CLAMP DEVICE FOR A DOOR LEAF
DISPOSITIF DE SERRAGE POUR UN BATTANT DE PORTE

(30) Priorität: 01.11.2019 DE 202019106086 U
(43) Veröffentlichungstag der Anmeldung: 05.05.2021
(73) Patentinhaber: Pauli + Sohn GmbH Metallwaren, 51597 Morsbach (DE)
(72) Erfinder: SCHNEIDER, Torben, 51597 Morsbach (DE); WIECZOREK, Christian, 57462 Olpe (DE)
(74) Vertreter: Neumann Müller Oberwalleney Patentanwälte PartG mbB

(56) Entgegenhaltungen:
- EP-A1- 2 071 109
- EP-B1- 2 080 862
- WO-A1-2019/025658
- DE-A1-102009 022 803
- US-A1- 2010 139 038
- US-B2- 9 856 693

## Beschreibung

Die vorliegende Erfindung betrifft eine Klemmvorrichtung für einen Türflügel umfassend zwei Seitenteile mit Verbindungsabschnitten, die mittels zumindest einer eine Schraubenachse aufweisenden Schraube miteinander verbunden sind, und mit Klemmabschnitten, die zwei einander zugewandte Klemmflächen zur klemmenden Aufnahme des Türflügels aufweisen, und zumindest ein zwischen den Verbindungsabschnitten angeordnetes Distanzelement, das baulich von den beiden Seitenteilen getrennt ist und sich an diesen abstützt.

Aus der EP 0 940 542 B1 ist eine solche Klemmvorrichtung für eine verglaste Schiebetür bekannt, die auf die Dicke des zu haltenden Türflügels eingestellt werden kann. Die Klemmvorrichtung weist zwei Seitenteile mit zwei einander zugewandten Klemmflächen für den Türflügel auf. Zwischen den beiden Seitenteilen kann ein Distanzelement eingesetzt werden, um den Abstand zwischen den beiden Klemmflächen zu verändern. Auf diese Weise können die Klemmflächen auf einen ersten Abstand, wenn das Distanzelement entnommen ist, und einen zweiten Abstand, wenn das Distanzelement eingesetzt ist, eingestellt werden. Als nachteilig daran wird empfunden, dass die Handhabung des Distanzelementes aufwendig erscheint und die Einstellbarkeit des Abstandes zwischen den beiden Klemmflächen begrenzt ist.

Aus der ES 2 310 495 B1 ist eine weitere Klemmvorrichtung für eine Schiebetüre bekannt, die auf die Dicke des zu haltenden Türflügels eingestellt werden kann. Die Klemmvorrichtung weist zwei Seitenteile mit zwei einander zugewandten Klemmflächen auf. Um den Abstand zwischen den beiden Klemmflächen auf die Dicke des zu haltenden Türflügels einstellen zu können, werden Verbindungselemente, die zwischen den beiden Seitenteilen angeordnet sind und diese miteinander verbinden, unterschiedlicher Länge bereitgestellt. Als nachteilig dann wird empfunden, dass die bekannte Klemmvorrichtung aus einer Vielzahl an Einzelbauteilen besteht, wodurch die Montage aufwendig ist. Zudem müssen für die unterschiedlichen Abstände unterschiedlich lange Verbindungselemente bereitgestellt werden, wodurch sich der logistische Aufwand erhöht. Aus der DE 10 2012 004 941 B4 ist eine weitere Klemmvorrichtung bekannt, bei der unterschiedlich lange Distanzelemente vorgesehen sind. Das Distanzelement ist austauschbar angeordnet und wird je nach Dicke der Schiebetür ausgetauscht.

Aus der EP 2 080 862 B1 ist eine Klemmvorrichtung für einen Türflügel bekannt, die auf die Dicke des zu haltenden Türflügels eingestellt werden kann. Die Klemmvorrichtung weist zwei Seitenteile mit zwei einander zugewandten Klemmflächen auf. Zur Einstellung des Abstandes zwischen den beiden Klemmflächen weisen die beiden Seitenteile zwei angeformte Koppelschenkel mit Verzahnungen auf. In einer Vormontagephase wird zunächst der Abstand zwischen den beiden Klemmflächen auf die Dicke des zur haltenden Türflügels eingestellt werden, in dem die Zahnprofile der beiden übereinander liegenden Koppelschenkel unterschiedlich tief miteinander in Eingriff gebracht werden. Als nachteilig daran wird empfunden, dass die beiden Seitenteile, wenn diese miteinander verschraubt sind, konisch zulaufend angeordnet sind. Zudem erscheint die Montage relativ aufwendig.

Die DE 10 2009 022 803 A1 offenbart einen dreiteiligen Universaltürbeschlag zur Montage an einem Türblatt, umfassend eine Trägerbrücke, die zwischen zwei Klemmplatten angeordnet ist. In der Trägerbrücke ist eine Scheibe gelagert, die über einen Werkzeugeingriff zum Verdrehen der Schreibe verfügt. Die Scheibe ist polygonal und punktsymmetrisch und weist verschiedene Seitenflächen mit verschiedenen Abständen zum Mittelpunkt der Scheibe auf. Durch Verdrehen der Scheibe kann somit der Abstand zwischen den beiden Klemmplatten eingestellt werden.

Aufgabe der vorliegenden Erfindung ist es daher, eine Klemmvorrichtung für einen Türflügel bereitzustellen, die flexibler auf die Dicke des zu haltenden Türflügels eingestellt werden kann und einfacher zu montieren ist.

Diese Aufgabe ist bei einer Klemmvorrichtung für einen Türflügel der eingangs genannten Art dadurch gelöst, dass zumindest einer der beiden Verbindungsabschnitte mehrere axial entlang der Schraubenachse voneinander beabstandete Stützebenen aufweist, wobei in jeder der Stützebenen zumindest eine Stützfläche liegt, und dass das zumindest eine Distanzelement mehrere axial entlang der Schraubenachse voneinander beabstandete Gegenebenen aufweist, wobei in jeder der Gegenebenen zumindest eine der Gegenflächen liegt, wobei das zumindest eine Distanzelement sich mit zumindest einer der Gegenflächen wahlweise an zumindest einer der Stützflächen abstützt, sodass das zumindest eine Distanzelement in einer ersten Aufnahmeposition, in der zwischen den beiden Klemmflächen ein erster Abstand gebildet ist, oder in zumindest einer weiteren Aufnahmeposition, in der zwischen den beiden Klemmflächen ein weiterer Abstand gebildet ist, der ungleich dem ersten Abstand ist, aufgenommen ist.

Von Vorteil ist, dass der Abstand zwischen den beiden Klemmflächen auf einfache Weise an die Dicke des zu haltenden Türflügels eingestellt werden kann. Hierzu kann das zumindest eine Distanzelement in unterschiedlichen Aufnahmepositionen aufgenommen sein. Das zumindest eine Distanzelement stützt sich dabei an den beiden Verbindungsabschnitten ab. Entsprechend wird durch die Wahl der Aufnahmeposition des zumindest einen Distanzelementes der Abstand zwischen den beiden Verbindungsabschnitten vorgegeben, wodurch der Abstand zwischen den beiden Klemmflächen im Klemmabschnitt eingestellt werden kann. Je nachdem, in welcher der zumindest zwei Aufnahmepositionen das zumindest eine Distanzelement aufgenommen ist, steht dieses unterschiedlich weit von dem aufnehmenden Verbindungsabschnitt hin zum gegenüberliegenden Verbindungsabschnitt vor.

In einer bevorzugten Ausführungsform kann das zumindest eine Distanzelement in der zumindest einen weiteren Aufnahmeposition gegenüber der ersten Aufnahmeposition um eine Drehachse um einen Winkel gedreht angeordnet sein. Auf diese Weise kann das jeweilige Distanzelement auf einfache Weise durch Drehen um dessen Drehachse in die unterschiedlichen Aufnahmepositionen überführt werden. Insbesondere können Sicherungsmittel vorhanden sein, um das zumindest eine Distanzelement in der jeweiligen Aufnahmeposition gegen Drehung um die Drehachse zu sichern. Weiterhin kann die Drehachse des zumindest einen Distanzelementes parallel zu der zumindest einen Schraubenachse sein. Insbesondere kann die Drehachse des zumindest einen Distanzelementes mit der Schraubenachse der zugeordneten Schraube zusammenfallen. Weiterhin kann die Anzahl der Aufnahmepositionen der Anzahl der Stützebenen entsprechen.

Alternativ zu einer Überführung des zumindest einen Distanzelementes in eine andere der Aufnahmepositionen durch Drehung kann gemäß einer besonders einfachen Ausgestaltung vorgesehen sein, dass in einem der beiden Verbindungsabschnitte mehrere Bohrungen ausgebildet sind, die unterschiedlich tief sind. Auf diese Weise bilden die Böden der Bohrungen die Stützflächen, die auf axial voneinander beabstandeten Stützebenen liegen. Durch wahlweises Einstecken des zumindest einen Distanzelementes in eine dieser Bohrungen kann die Aufnahmeposition verändert werden.

Um ein besonders einfach einzustellende Klemmvorrichtung bereitzustellen, kann eine Stirnseite des zumindest einen Distanzelementes gestuft ausgebildet sein, wobei an der gestuften Stirnseite die dem zumindest einen Distanzelement zugeordneten Gegenflächen angeordnet sind. Auf diese Weise kann das zumindest eine Distanzelement mit seiner Stirnseite zum Seitenelement, dessen Verbindungsabschnitt die Stützflächen aufweist, ausgerichtet werden. Weiterhin kann eine von der gestuften Stirnseite abgewandte Stirnseite des zumindest einen Distanzelementes eben ausgebildet sein. Auf diese Weise ergibt sich eine besonders stabile Abstützung des zumindest einen Distanzelementes zwischen den beiden Verbindungsabschnitten.

Gemäß einem weiteren Aspekt kann vorgesehen sein, dass das zumindest eine Distanzelement ringförmig ausgebildet ist. Insbesondere kann das zumindest eine Distanzelement eine Durchgangsbohrung aufweisen, durch die sich die zumindest eine Schraube hindurch erstreckt. Dadurch ergibt sich eine besonders stabile Abstützung der beiden Seitenelemente über das zwischen diesen angeordnete zumindest eine Distanzelement.

In bevorzugter Weise weist zumindest einer der beiden Verbindungsabschnitte zumindest eine Vertiefung mit einem gestuften Boden auf, der zumindest mehrere der Stützflächen umfasst. Mit anderen Worten kann der zumindest eine Boden ein Höhenprofil aufweisen. In die zumindest eine Vertiefung kann das zumindest eine Distanzelement auf einfache Weise gesteckt werden, wodurch die Montage vereinfacht wird. Insbesondere kann der Boden der zumindest einen Vertiefung ringförmig ausgebildet sein und eine konzentrisch zu der zumindest einen Schraubenachse angeordnete Öffnung für die zumindest eine Schraube umschließen. Die Anzahl an Schrauben kann der Anzahl an Distanzelementen entsprechen. Dadurch, dass die zumindest eine Schraube durch das zumindest eine Distanzelement greift, ergibt sich eine besonders vorteilhafte Abstützung der beiden Verbindungsabschnitte über das zumindest eine Distanzelement.

Zweckmäßigerweise sind die dem Boden der zumindest einen Vertiefung zugeordneten Stützflächen in Umfangsrichtung um die zumindest eine Schraubenachse verteilt angeordnet. Insbesondere kann der Boden der zumindest einen Vertiefung ein sich in Umfangsrichtung um die zumindest eine Schraubenachse wiederholendes Muster aufweist. Das Muster kann sich zwei Mal, drei Mal, vier Mal oder fünf Mal wiederholen. Vorzugsweise wiederholt sich das Muster genau drei Mal. Dadurch wird gewährleistet, dass sich das zumindest eine Distanzelement in jeder der Aufnahmepositionen stets an mindestens drei Stützflächen mit einer gleichen Menge der Gegenflächen abstützen kann.

Um eine besonders stabile Abstützung des zumindest einen Distanzelementes gegenüber den beiden Verbindungsabschnitte zu erhalten, kann vorgesehen sein, dass das zumindest eine Distanzelement sich in jeder der Aufnahmepositionen mit zumindest einer Teilmenge der Gegenflächen an einer Teilmenge der Stützflächen abstützt. Insbesondere kann die Anzahl der Stützebenen der Anzahl der Gegenebenen oder einem insbesondere ganzzahligen Vielfachen von der Anzahl der Gegenebenen entsprechen. Vorzugsweise liegen in jeder der Stützebenen drei der Stützflächen. Grundsätzlich können aber auch in jeder der Stützebenen nur eine oder zwei oder mehr als drei der Stützflächen liegen. Bei Ausgestaltung mit drei Stützflächen pro Stützebene hat sich eine besonders kompakte Bauform ergeben, die zudem eine äußerste stabile Abstützung gewährleistet.

In bevorzugter Weise ist vorgesehen, dass die Anzahl der zumindest einen Schraube der Anzahl der zumindest einen Vertiefung in dem ersten Verbindungsabschnitt und der Anzahl des zumindest einen Distanzelementes entspricht. Weiterhin kann vorgesehen sein, dass zumindest zwei der Distanzelemente vorgesehen sind, wobei die Gesamtmenge der Stützflächen an einer der beiden Verbindungsabschnitte ausgebildet ist. Grundsätzlich möglich ist aber auch, dass die beiden Verbindungsabschnitte jeweils eine Teilmenge der Stützflächen aufweisen. Dies ist vor allem dann von Vorteil, wenn das zumindest eine Distanzelement beidseitig Gegenflächen aufweist. Dies kann allerdings auch dann von Vorteil sein, wenn zwei oder mehrere der Distanzelemente eingesetzt werden, wobei die Distanzelemente unterschiedlich ausgerichtet zwischen den Verbindungsabschnitten angeordnet sein können.

In bevorzugter Weise sind die beiden Klemmflächen stets parallel zueinander ausgerichtet. Insbesondere ist die Schraubenachse der zumindest einen Schraube senkrecht zu den beiden Klemmflächen ausgerichtet. Über die zumindest eine Schraube können die beiden Seitenteile miteinander verspannt werden.

Des Weiteren kann vorgesehen sein, dass die Klemmvorrichtung optische und/oder haptische Anzeigemittel zur Anzeige der Stützebene und/oder zur Ausrichtung des zumindest einen Distanzelementes aufweist. Dadurch wird die Montage der Klemmvorrichtung vereinfacht.

Gemäß einem Aspekt kann die Klemmvorrichtung ein Laufwagen für eine Schiebetüre sein, wobei zwischen den Klemmflächen ein Türflügel hängend fixierbar ist. An der Klemmvorrichtung kann eine Achse mit einer Laufrolle gelagert sein, die sich an einem Laufsteg einer Laufschiene abstützen kann. Grundsätzlich möglich ist aber auch, dass die Klemmvorrichtung an einem Flächenelement befestigt ist, um dieses an einem ortsfesten Bauteil, beispielsweise einer Gebäudewand oder einem Pfosten, zu fixieren.

Bevorzugte Ausführungsbeispiele der vorliegenden Erfindung werden in den Zeichnungen dargestellt und nachstehend beschrieben. Hierin zeigt:
- Figur 1: eine Explosionsansicht einer Klemmvorrichtung gemäß einer Ausführungsform in einer ersten Schrägansicht;
- Figur 2: eine Explosionsansicht der Klemmvorrichtung aus Figur 1 in einer zweiten Schrägansicht;
- Figur 3: eine perspektivische Ansicht eines ersten Seitenelement der Klemmvorrichtung aus Figur 1;
- Figur 4: eine Seitenansicht eines Distanzelementes der Klemmvorrichtung aus Figur 1;
- Figur 5: eine perspektivische Schrägansicht des Distanzelementes aus Figur 4;
- Figur 6: eine weitere perspektivische Schrägansicht des Distanzelementes aus Figur 4; und
- Figur 7: eine perspektivische Seitenansicht eines Teilausschnitts einer Schiebetüranordnung gemäß einer Ausführungsform mit der Klemmvorrichtung aus Figur 1.

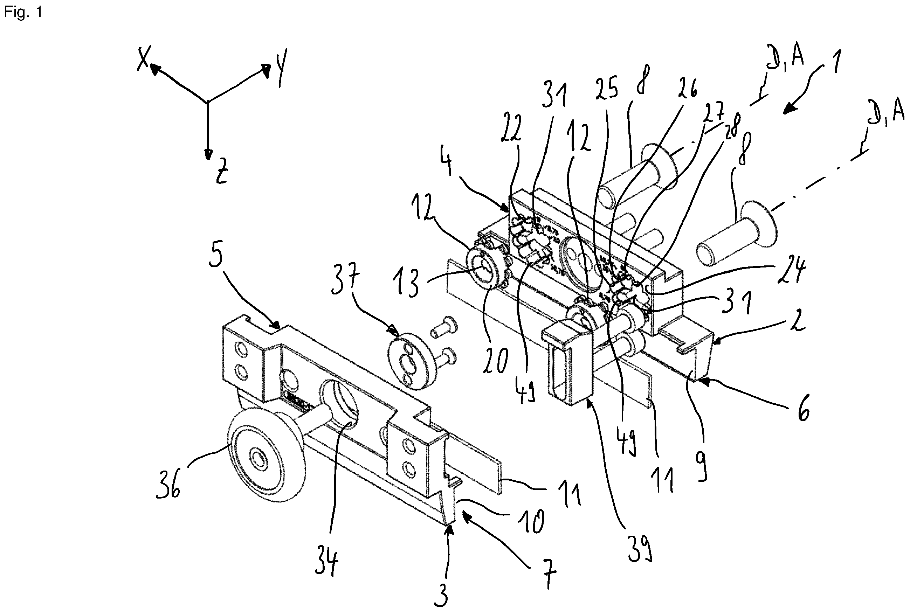

In Figuren 1 bis 6 ist eine Klemmvorrichtung 1 gemäß einer Ausführungsform der vorliegenden Erfindung dargestellt. Die Figuren 1 bis 6 werden nachstehend gemeinsam beschrieben. Die Klemmvorrichtung 1 kann auch als Klemmbeschlag bezeichnet werden, der über Reibungskräfte einen Türflügel hält. Zum Beispiel kann die Klemmvorrichtung 1 als Laufwagen für eine Schiebetür ausgestaltet sein. Hierzu kann die Klemmvorrichtung 1 in einem oberen Randbereich eines Türflügels, beispielsweise eines Ganzglasschiebeflügel einer Schiebetüranordnung, befestigt werden, um den Türflügel hängend zu fixieren.

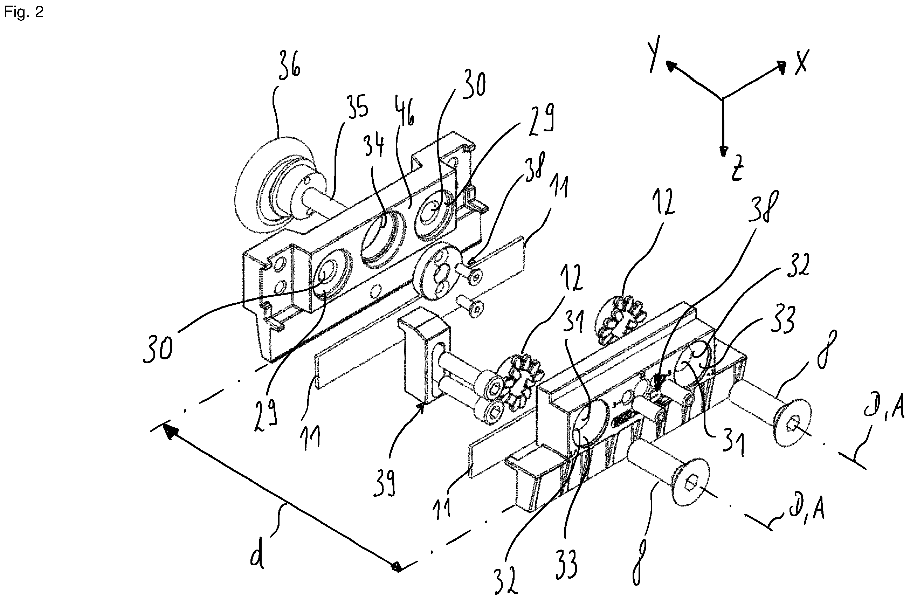

Zur Verdeutlichung der Ausrichtung der Klemmvorrichtung 1 im Raum sind in den Figuren 1 und 2 jeweils ein kartesisches Koordinatensystem mit einer Längsachse X, einer Querachse Y und einer Hochachse Z eingezeichnet.

Die Klemmvorrichtung 1 weist ein erstes Seitenteil 2 und ein zweites Seitenteil 3 auf. Die Seitenteile 2, 3 weisen jeweils einen Verbindungsabschnitt 4, 5 und einen Klemmabschnitt 6, 7 auf. Die Seitenteile 2, 3 sind jeweils einteilig ausgebildet. In den Verbindungsabschnitten 4, 5 sind die beiden Seitenteile 2, 3 mit, hier, zwei Schrauben 8 miteinander verbunden. Die Schrauben 8 weisen jeweils eine Schraubenachse A auf, die parallel zur Querachse Y verläuft. In den Klemmabschnitten 6, 7 sind zwei einander zugewandte Klemmflächen 9, 10 zur klemmenden Aufnahme des Türflügels angeordnet. Die Klemmflächen 9, 10 sind parallel zueinander und mit einem Abstand d voneinander angeordnet. Die Schraubenachsen A sind senkrecht zu den Klemmflächen 9, 10 ausgerichtet. Im montierten Zustand, in dem die Klemmvorrichtung 1 den Türflügel klemmend fixiert, sind die Klemmflächen 9, 10, zum Beispiel unter Zwischenschaltung rutschhemmender Einlagen 11, mit der über die Schrauben 8 eingestellten Klemmkraft flächig mit der jeweils zugewandten Oberfläche des Türflügels, insbesondere einer planparallelen Ganzglasscheibe, in Anlage.

Zur Einstellung des Abstandes d zwischen den beiden Klemmflächen 9, 10 sind Distanzelemente 12 vorgesehen. Die Anzahl der Distanzelemente 12 beläuft sich, hier, auf zwei und entspricht, hier, der Anzahl der Schrauben 8. Die Distanzelemente 12 sind zwischen den beiden Verbindungsabschnitten 4, 5 angeordnet und stützen sich an diesen ab. Die Distanzelemente 12 sind ringförmig ausgebildet und weisen jeweils eine zentrale Durchgangsbohrung 13 auf, durch die sich jeweils eine der Schrauben 8 hindurch erstreckt.

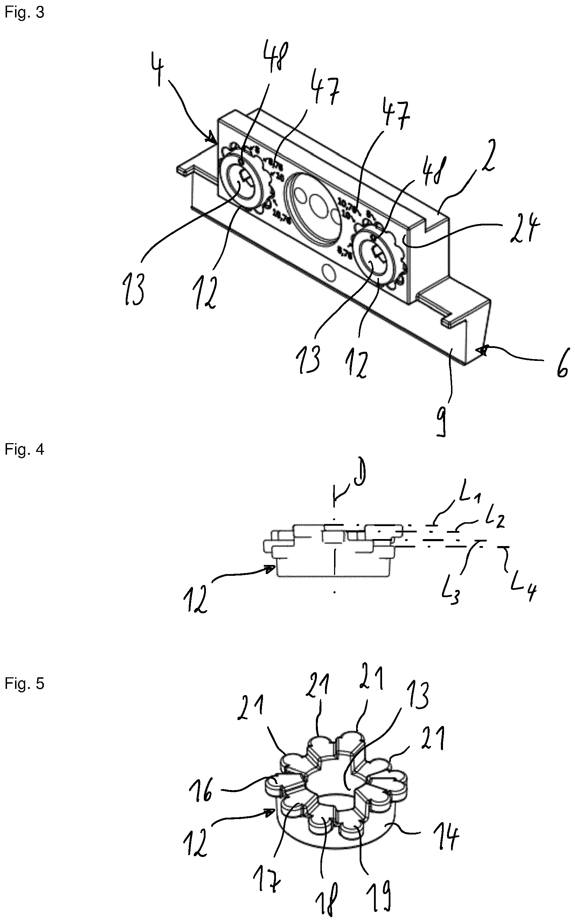

Die beiden Distanzelemente 12 sind identisch ausgebildet, weshalb im Weiteren deren Aufbau anhand eines der beiden Distanzelemente 12 beschrieben. Das Distanzelement 12 ist baulich von den beiden Seitenteilen 2, 3 getrennt und stellt ein eigenständiges Bauteil dar. In den Figuren 4 bis 6 ist das Distanzelement 12 als Einzelbauteil gezeigt.

Das Distanzelement 12 weist einen hohlzylindrischen Grundkörper 14 auf, der konzentrisch zu einer Drehachse D des Distanzelementes 11 ausgebildet ist. Wenn die Distanzelemente 12 zwischen den beiden Seitenteilen 2, 3 angeordnet sind, fällt die Drehachse D des jeweiligen Distanzelementes 12 mit der Schraubenachse A der durch das jeweilige Distanzelement 12 durchgreifenden Schraube 8 zusammen.

An einer dem ersten Seitenteil 2 zugewandten ersten Stirnseite 15 sind an dem Distanzelement 12 mehrere, hier vier, axial zur Drehachse D voneinander beabstandete Gegenebenen L₁, L₂, L₃, L₄ gebildet, sodass die erste Stirnseite 15 gestuft ausgebildet ist. Die Drehachse D ist senkrecht zu den Gegenebenen L₁, L₂, L₃, L₄ ausgerichtet. In jeder der, hier, vier Gegenebenen L₁, L₂, L₃, L₄ des Distanzelementes 12 liegen, hier, drei Gegenflächen, zu denen die Drehachse D folglich ebenfalls senkrecht angeordnet ist. Die drei in der ersten Gegenebene L₁ liegenden Gegenflächen werden jeweils als erste Gegenfläche 16 bezeichnet. In analoger Weise werden die weiteren Gegenflächen als zweite Gegenflächen 17, dritte Gegenflächen 18 und vierte Gegenflächen 19 bezeichnet. Damit weist das Distanzelement 12 an der ersten Stirnseite 15 insgesamt zwölf Gegenflächen 16, 17, 18, 19 auf, die über die vier Gegenebenen L₁, L₂, L₃, L₄ verteilt angeordnet sind.

Die in der jeweiligen Gegenebene L₁, L₂, L₃, L₄ liegenden Gegenflächen 16, 17, 18, 19 sind in Umfangsrichtung um die Drehachse D gleichverteilt angeordnet. Bei den, hier, jeweils drei Gegenflächen 16, 17, 18, 19 pro Gegenebene L₁, L₂, L₃, L₄ sind die Gegenflächen der jeweiligen Gegenebene um jeweils 120 Grad zueinander versetzt angeordnet. Entsprechend weist die erste Stirnseite 15 des Distanzelementes 12 ein sich in Umfangsrichtung um die Drehachse D, hier, drei Mal wiederholendes Muster auf. Konkret wird in einer der beiden Drehrichtungen um die Drehachse D betrachtet der Abstand der vier, ein Muster bildenden, Gegenflächen 16, 17, 18, 19 zu einer eben ausgebildeten zweiten Stirnseite 20 stufenweise kleiner. Das Muster beginnt mit der ersten Gegenfläche 16, die den größten Abstand zur zweiten Stirnseite 20 aufweist, und schließt mit der vierten Gegenfläche 19 ab, die den geringsten Abstand zu der zweiten Stirnseite 20 aufweist.

Die Gegenflächen 16, 17, 18, 19 sind gleich groß ausgebildet. Radial innen beginnen die Gegenflächen 16, 17, 18, 19 auf einem gedachten gemeinsamen Innenkreis, der konzentrisch zur Drehachse D ausgebildet ist. Der Innenradius des Innenkreises kann dem Innenradius des hohlzylindrischen Grundkörpers 14 entsprechen. Nach radial au-ßen hin sind die einzelnen Gegenflächen 16, 17, 18, 19 konisch erweitert und können, wie in den Figuren 4 bis 6 gezeigt, über den Außenradius des hohlzylindrischen Grundkörpers 14 überstehen. Nach radial außen hin können die einzelnen Gegenflächen 16, 17, 18, 19 durch nach außen gewölbte Kantenabschnitte 21 begrenzt sein. Grundsätzlich ist es auch möglich, dass die Gegenflächen 16, 17, 18, 19 nach radial außen mit dem Außenradius des Grundkörpers 14 abschließen.

Das erste Seitenteil 2 weist zwei entlang der Längsachse X voneinander beabstandete Vertiefungen 22 auf, in denen die beiden Distanzelemente 11 mit deren ersten Stirnseite 15 dem ersten Seitenteil 2 zugewandt aufgenommen sind. Grundsätzlich möglich ist auch, dass stattdessen das zweite Seitenteil 3 die Vertiefungen 22 aufweist, oder die beiden Seitenteile 2, 3 jeweils eine der Vertiefungen 22 aufweisen.

Die Vertiefungen 22 weisen jeweils einen gestuften Boden 23 mit einem zu dem gestuft ausgebildeten Profil der ersten Stirnseite 15 des Distanzelementes 12 gegengleich ausgebildetem Profil auf. Somit weisen die Böden 23 der Vertiefungen 22 vier Stützebenen auf, deren axiale Abstände untereinander den axialen Abständen zwischen den Gegenebenen L₁, L₂, L₃, L₄ entsprechen.

Die Stützebenen des ersten Seitenteils 2 sind gegenüber einer dem zweiten Seitenteil 3 zugewandten Außenfläche 24 zurückgesetzt. Mit anderen Worten liegen die vier Stützebenen innerhalb des ersten Seitenteils 2. Die Stützebenen sind parallel sowohl zu der Außenfläche 24 als auch zu den Klemmflächen 9, 10 ausgerichtet. Die Schraubenachsen A sind senkrecht zu den Stützebenen angeordnet. In jeder der Stützebenen sind wiederum drei Stützflächen über den Umfang gleichverteilt angeordnet. Analog zu der Bezeichnung der Gegenflächen 16, 17, 18, 19 werden die in der ersten Stützebene liegenden Stützflächen als erste Stützflächen 25, zweite Stützflächen 26, dritte Stützflächen 27 und vierte Stützflächen 28 bezeichnet. Entsprechend weist auch der jeweilige Boden 23 ein sich in Umfangsrichtung um die jeweilige Schraubenachse A, hier, drei Mal wiederholendes Muster auf. Konkret wird der Abstand der Stützflächen 25, 26, 27, 28 zu der Außenfläche 24 stufenweise größer. Das Muster beginnt mit der ersten Stützfläche 25, die den kleinsten Abstand zur Außenfläche 24 aufweist, und schließt mit der vierten Stützfläche 28 ab, die den größten Abstand zu der Außenfläche 24 aufweist.

Die in den Figuren 1 bis 6 gezeigte Ausführungsform weist in jeder der Stützebenen beziehungsweise der Gegenebenen L₁, L₂, L₃, L₄ jeweils drei der Stützflächen beziehungsweise drei der Gegenflächen auf. Grundsätzlich möglich sind aber auch andere Ausgestaltungen, bei denen mehr als die vier Stützebenen beziehungsweise Gegenebenen oder nur zwei oder drei dieser Ebenen vorgesehen sind. Ebenso können in jeder der Ebenen auch mehr als die drei Flächen oder nur eine oder zwei der Flächen vorgesehen sein.

Vorliegend ergeben sich vier mögliche Aufnahmepositionen, zwischen denen frei gewählt werden kann. Dabei sollten die Distanzelemente 12 jedoch stets in dergleichen Aufnahmeposition in der dem jeweiligen Distanzelement 12 zugeordneten Vertiefung 22 aufgenommen sein, um den zu haltenden Türflügel gleichmäßig einklemmen zu können. In einer ersten Aufnahmeposition stützen sich die ersten Gegenflächen 16 an den ersten Stützflächen 25 ab, sodass die Distanzelemente 12 weit über die Außenfläche 24 vorstehen. Dadurch ist zwischen den beiden Klemmflächen 9, 10 erster Abstand d gebildet. Dabei handelt es sich um den größten einstellbaren Abstand d zwischen den beiden Klemmflächen 9, 10, der beispielsweise geeignet sein kann, um einen Türflügel, insbesondere eine Glasscheine mit einer Dicke von 10,76 Millimeter zu halten. Mit den weiteren Aufnahmepositionen tauchen die Distanzelemente 12 immer weiter in die Vertiefungen 22 ein. In einer vierten Aufnahmeposition ist der einstellbare Abstand d zwischen den beiden Klemmflächen 9, 10 minimal. Aufgrund der vier einstellbaren Abstände d kann die Klemmvorrichtung 1 geeignet sein, um vier unterschiedlich dicke Türflügel zu halten. Die Dicken können beispielsweise 10,76 Millimeter in der ersten Aufnahmeposition, 10 Millimeter in der zweiten Aufnahmeposition, 8,76 Millimeter in der dritten Aufnahmeposition und 8 Millimeter in der vierten Aufnahmeposition betragen. Grundsätzlich sind aber auch andere Abstände d denkbar und möglich.

Um die Aufnahmeposition des jeweiligen Distanzelementes 12 zu verändern, wird dieses um seine Drehachse D gedreht. Vorliegend sind in jeder Gegenebene L₁, L₂, L₃, L₄ vier der Gegenflächen, sodass sich insgesamt 12 Gegenflächen ergeben. Entsprechend muss das Distanzelement 12 um 30 Grad um die Drehachse D gedreht werden, um zwischen zwei angrenzenden Aufnahmepositionen zu wechseln. Um bei Montage die Drehstellung des Distanzelementes 12 und die Aufnahmeposition einfach erkennen zu können, sind Markierungen 47 an dem ersten Seitenteil 2, hier auf den Außenflächen 24 aufgebracht. Des Weiteren ist auf der zweiten Stirnseite 20 des jeweiligen Distanzelementes 12 eine Markierung 48 ausgebildet. Die Markierung 48 kann eine punktuelle Vertiefung sein, die optisch und haptisch wahrnehmbar ist.

In der jeweiligen Aufnahmeposition sind die Distanzelemente 12 gegen Drehung um deren Drehachse D durch Sicherungsmittel gesichert. Als Sicherungsmittel dienen zum einen die Gegenflächen 16, 17, 18, 19, die als Vorsprünge abschnittsweise radial nach außen über den Außenumfang des Grundkörpers 14 überstehen. Zum anderen weisen die Vertiefungen 22 in der Umfangsrichtung um die jeweilige Schraubenachse A entsprechend der Anzahl der Stützflächen 25, 26, 27, 28 Taschen 49 auf. Die Taschen 49 sind radial nach innen sowie axial nach oben, das heißt hin zur Außenfläche 24, offen ausgebildet, um das Distanzelement 12 aufnehmen zu können. Hier können in den Vertiefungen 22 jeweils zwölf der Taschen 49 verteilt angeordnet sein. In der Figur 1 ist der Übersichtlichkeit halber in den beiden Vertiefungen 22 jeweils nur eine der Taschen exemplarisch mit dem Bezugszeichen 49 versehen.

Die Distanzelemente 12 stützen sich in den Aufnahmepositionen mit den zweiten Stirnseiten 20 an dem zweiten Seitenteil 3 ab. Hier weist das Seitenteil 3 Kontaktflächen 29 auf, an denen die zweiten Stirnseiten 20 anliegen. Die Kontaktflächen 29 sind gegenüber einer dem ersten Seitenteil 2 zugewandten Außenfläche 46 zurückgestellt. Dabei können die Kontaktflächen 29 soweit zurückgesetzt sein, dass die beiden Außenflächen 24, 46 der Seitenteile 2, 3 in der vierten Aufnahmeposition, in der der Abstand d zwischen den beiden Klemmflächen 9, 10 minimal ist, flächig aneinander liegen. Ebenso ist möglich, dass die Außenflächen 24, 46 in jeder der Aufnahmepositionen voneinander beabstandet bleiben.

Die Kontaktflächen 29 können konzentrisch zu Durchgangsbohrungen 30 in dem zweiten Seitenteil 3 ausgebildet sein. Die Durchgangsbohrungen 30 können zur Aufnahme der Schrauben 8 konzentrisch zu der jeweiligen Schraubenachse A ausgebildet sein. In den Durchgangsbohrungen 30 können Innengewinde ausgebildet sein, in die die Schraubenenden der Schrauben 8 eingeschraubt sein können.

Entsprechend können in dem ersten Seitenteil 2 konzentrisch zu den Schraubenachsen A ausgebildete Öffnungen 31 in den beiden Böden 23 der jeweiligen Vertiefung 22 ausgebildet sein. Die Öffnungen 31 können in Umfangsrichtung um die jeweilige Schraubenachse A von dem gestuft ausgebildeten Boden 23 ringförmig umschlossen sein. An die Öffnungen 31 schließen sich wiederum Durchgangsbohrungen 32 an. Die Schrauben 8 können durch die Durchgangsbohrungen 32 im ersten Seitenteil 2 eingesetzt werden, sich durch die Distanzelemente 12 erstrecken und in den Durchgangsbohrungen 30 eingeschraubt sein, um die beiden Verbindungsabschnitte 4, 5 miteinander zu verbinden. Die Schraubenköpfe der Schrauben 8 können in am ersten Seitenteil 2 ausgebildeten Senklochbohrungen 33 aufgenommen sein.

Mittig zwischen den beiden Distanzelementen 12 kann in dem zweiten Seitenteil 3 eine Achsbohrung 34 zur Aufnahme einer Achse 35 einer Laufrolle 36 ausgebildet sein. Die Laufrolle 36 kann auf eine als Exzenter ausgebildete Achse 35 aufgepresst sein. Mittels der Einstellmittel 37 kann die Laufrolle 36 in an sich bekannter Weise in der Höhe, das heißt parallel zur Hochachse Z, verstellt werden. In dem ersten Seitenteil 2 sind Fixiermittel 38 vorgesehen, um die eingestellte Höhenposition zu fixieren. Weiterhin kann die als Laufwagen ausgebildete Klemmvorrichtung 1 eine Aushebesicherung 39 für den Türflügel aufweisen, wenn dieser als Schiebetürflügel eingesetzt wird.

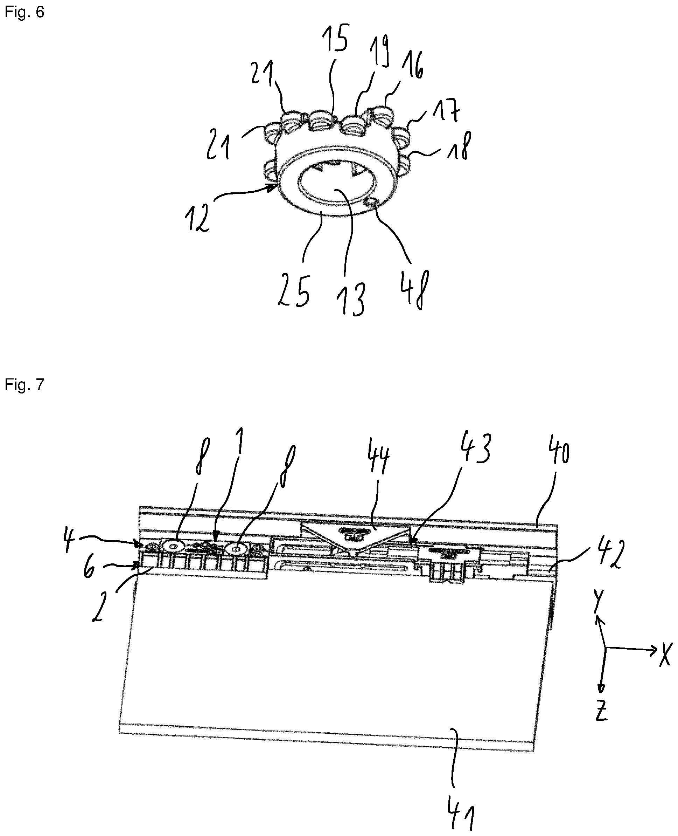

In Figur 7 ist eine Schiebetüranordnung gemäß einer Ausführungsform der vorliegenden Erfindung dargestellt.

Zur Verdeutlichung der Ausrichtung der Schiebetüranordnung im Raum ist in der Figur 7 ein kartesisches Koordinatensystem mit einer Längsachse X, einer Querachse Y und einer Hochachse Z eingezeichnet.

Die Schiebetüranordnung weist eine Laufschiene 40 und einen Türflügel 41 auf, der entlang der durch die Laufschiene 40 definierten Längsachse X verschiebbar geführt ist. Um den Türflügel 41 in der Laufschiene 40 verschiebbar zu führen, umfasst die Schiebetüranordnung zwei der Klemmvorrichtungen 1, an denen der Türflügel 41 hängend fixiert ist. In dem in der Figur 7 gezeigten Teilausschnitt der Schiebetüranordnung ist nur die linke Klemmvorrichtung 1 gezeigt. Die Klemmvorrichtungen 1 stützen sich jeweils über einen an der Laufschiene 1 ausgebildeten Laufsteg 42 ab. An den Klemmvorrichtungen 1 kann jeweils ein Dämpfer 43 gehalten sein, um den Türflügel 41 vor Erreichen einer Endlage gesteuert abzubremsen. Hierzu können an der Laufschiene 40 zwei Aktivatoren 44 befestigt sein, die mit Mitnehmern der Dämpfer 45 zusammenwirken, um den Türflügel 41 gesteuert abzubremsen.

### Bezugszeichenliste

- 1: Klemmvorrichtung
- 2: Seitenteil
- 3: Seitenteil
- 4: Verbindungsabschnitt
- 5: Verbindungsabschnitt
- 6: Klemmabschnitt
- 7: Klemmabschnitt
- 8: Schraube
- 9: Klemmflächen
- 10: Klemmflächen
- 11: Einlage
- 12: Distanzelement
- 13: Durchgangsbohrung
- 14: Grundkörper
- 15: erste Stirnseite
- 16: erste Gegenfläche
- 17: zweite Gegenfläche
- 18: dritte Gegenfläche
- 19: vierte Gegenfläche
- 20: zweite Stirnseite
- 21: Kantenabschnitt
- 22: Vertiefung
- 23: Boden
- 24: Außenfläche
- 25: erste Stützfläche
- 26: zweite Stützfläche
- 27: dritte Stützfläche
- 28: vierte Stützfläche
- 29: Kontaktfläche
- 30: Durchgangsbohrung
- 31: Öffnung
- 32: Durchgangsbohrung
- 33: Senklochbohrung
- 34: Achsbohrung
- 35: Achse
- 36: Laufrolle
- 37: Einstellmittel
- 38: Fixiermittel
- 39: Aushebesicherung
- 40: Laufschiene
- 41: Türflügel
- 42: Laufsteg
- 43: Dämpfer
- 44: Aktivator
- 45: Dämpfer
- 46: Außenfläche
- 47: Markierung
- 48: Markierung
- 49: Tasche
- d: Abstand
- A: Schraubenachse
- D: Drehachse
- L: Gegenebene
- X: Längsachse
- Y: Querachse
- Z: Hochachse

## Patentansprüche

1. Klemmvorrichtung (1) für einen Türflügel (41) umfassend
zwei Seitenteile (2, 3) mit Verbindungsabschnitten (4, 5), die mittels zumindest einer eine Schraubenachse (A) aufweisenden Schraube (8) miteinander verbunden sind, und mit Klemmabschnitten (6, 7), die zwei einander zugewandte Klemmflächen (9, 10) zur klemmenden Aufnahme des Türflügels (41) aufweisen, und
zumindest ein zwischen den Verbindungsabschnitten (4, 5) der Seitenteile (2, 3) angeordnetes Distanzelement (12), das baulich von den beiden Seitenteilen (2, 3) getrennt ist und sich an diesen abstützt,
**dadurch gekennzeichnet,**
**dass** zumindest einer der beiden Verbindungsabschnitte (4, 5) der Seitenteile (2, 3) mehrere axial entlang der Schraubenachse (A) voneinander beabstandete Stützebenen aufweist, wobei in jeder der Stützebenen zumindest eine Stützfläche (25, 26, 27, 28) liegt, und dass das zumindest eine Distanzelement (12) mehrere axial entlang der Schraubenachse (A) voneinander beabstandete Gegenebenen (L₁, L₂, L₃, L₄) aufweist, wobei in jeder der Gegenebenen (L₁, L₂, L₃, L₄) zumindest eine Gegenfläche (16, 17, 18, 19) liegt,
wobei das zumindest eine Distanzelement (12) sich mit zumindest einer der Gegenflächen (16, 17, 18, 19) wahlweise an zumindest einer der Stützflächen (25, 26, 27, 28) abstützt, sodass das zumindest eine Distanzelement (12) in einer ersten Aufnahmeposition, in der zwischen den beiden Klemmflächen (9, 10) der Seitenteile (2, 3) ein erster Abstand (d) gebildet ist, oder in zumindest einer weiteren Aufnahmeposition, in der zwischen den beiden Klemmflächen (8, 9) der Seitenteile (2, 3) ein weiterer Abstand (d) gebildet ist, der ungleich dem ersten Abstand ist, aufgenommen ist.

2. Klemmvorrichtung (1) nach Anspruch 1, **dadurch gekennzeichnet, dass** das zumindest eine Distanzelement (12) in der zumindest einen weiteren Aufnahmeposition gegenüber der ersten Aufnahmeposition um eine Drehachse (D) um einen Winkel gedreht angeordnet ist.

3. Klemmvorrichtung nach Anspruch 2, **dadurch gekennzeichnet, dass** Sicherungsmittel (49) vorhanden sind, um das zumindest eine Distanzelement (12) in der jeweiligen Aufnahmeposition gegen Drehung um die Drehachse (D) zu sichern.

4. Klemmvorrichtung nach Anspruch 2 oder 3, **dadurch gekennzeichnet, dass** die Drehachse (D) des zumindest einen Distanzelementes (12) parallel zu der zumindest einen Schraubenachse (A) ist.

5. Klemmvorrichtung nach einem der Ansprüche 1 bis 4, **dadurch gekennzeichnet, dass** eine Stirnseite (15) des zumindest einen Distanzelementes (12) gestuft ausgebildet ist, wobei an der gestuft ausgebildeten Stirnseite (15) die dem zumindest einen Distanzelement (12) zugeordneten Gegenflächen (16, 17, 18, 19) angeordnet sind.

6. Klemmvorrichtung nach Anspruch 5, **dadurch gekennzeichnet, dass** eine von der gestuft ausgebildeten Stirnseite (15) abgewandte Stirnseite (20) des zumindest einen Distanzelementes (12) eben ausgebildet ist.

7. Klemmvorrichtung nach einem der Ansprüche 1 bis 6, **dadurch gekennzeichnet, dass** das zumindest eine Distanzelement (12) ringförmig ausgebildet ist.

8. Klemmvorrichtung nach einem der Ansprüche 1 bis 7, **dadurch gekennzeichnet, dass** das zumindest eine Distanzelement (12) eine Durchgangsbohrung (13) aufweist, durch die sich die zumindest eine Schraube (8) hindurch erstreckt.

9. Klemmvorrichtung nach einem der Ansprüche 1 bis 8, **dadurch gekennzeichnet, dass** zumindest einer der beiden Verbindungsabschnitte (4, 5) der Seitenteile (2, 3) zumindest eine Vertiefung (22) mit einem gestuften Boden (23) aufweist, der zumindest mehrere der Stützflächen (25, 26, 27, 28) umfasst.

10. Klemmvorrichtung nach Anspruch 9, **dadurch gekennzeichnet, dass** der Boden (23) der zumindest einen Vertiefung (22) ringförmig ausgebildet ist und eine konzentrisch zu der zumindest einen Schraubenachse (A) angeordnete Öffnung (31) für die zumindest eine Schraube (8) umschließt.

11. Klemmvorrichtung nach Anspruch 8 oder 9, **dadurch gekennzeichnet, dass** die dem Boden (23) der zumindest einen Vertiefung (22) zugeordneten Stützflächen (25, 26, 28, 28) in Umfangsrichtung um die zumindest eine Schraubenachse (A) verteilt angeordnet sind.

12. Klemmvorrichtung nach einem der Ansprüche 8 bis 11, **dadurch gekennzeichnet, dass** der Boden (23) der zumindest einen Vertiefung (22) ein sich in Umfangsrichtung um die zumindest eine Schraubenachse (A) wiederholendes Muster aufweist, wobei sich dieses Muster insbesondere drei Mal wiederholt.

13. Klemmvorrichtung nach einem der Ansprüche 1 bis 12, **dadurch gekennzeichnet, dass** das zumindest eine Distanzelement (12) sich in jeder der Aufnahmepositionen mit zumindest einer Teilmenge der Gegenflächen (16, 17, 18, 19) an einer Teilmenge der Stützflächen (25, 26, 27, 28) abstützt.

14. Klemmvorrichtung nach einem der Ansprüche 1 bis 13, **dadurch gekennzeichnet, dass** die Anzahl der Stützebenen der Anzahl der Gegenebenen (L₁, L₂, L₃, L₄) oder einem ganzzahligen Vielfachen von der Anzahl der Gegenebenen (L₁, L₂, L₃, L₄) entspricht.

15. Klemmvorrichtung nach einem der Ansprüche 1 bis 14, **dadurch gekennzeichnet, dass** die Klemmvorrichtung (1) ein Laufwagen für eine Schiebetüre ist, wobei zwischen den Klemmflächen (9, 10) der Seitenteile (2, 3) ein Türflügel (41) hängend fixierbar ist.

## Claims

1. Clamping device (1) for a door leaf (41) comprising
two side parts (2, 3) with connecting portions (4, 5), which are connected to each other by at least one screw (8) having a screw axis (A), and with clamping portions (6, 7), which have two clamping faces (9, 10) facing one another for clampingly receiving the door leaf (41), and
at least one spacer element (12) arranged between the connecting portions (4, 5) of the side parts (2, 3), which is structurally separated from the two side parts (2, 3) and is supported thereagainst,
**characterised in**
**that** at least one of the two connecting portions (4, 5) of the side parts (2, 3) has a plurality of support planes axially spaced along the screw axis (A), at least one support face (25, 26, 27, 28) being located in each of the support planes, and
**that** the at least one spacer element (12) has a plurality of counterplanes (L₁ , L₂, i₋₃, L₄) axially spaced along the screw axis (A), wherein at least one counter face (16, 17, 18, 19) being located in each of the counterplanes (L₁, L₂, L₃, L₄), wherein the at least one spacer element (12) with at least one of the counter faces (16, 17, 18, 19) is supported selectively on at least one of the support faces (25, 26, 27, 28), so that the at least one spacer element (12) in a first receiving position, in which a first distance (d) is formed between the two clamping faces (9, 10) of the side parts (2, 3), or in at least one further receiving position in which a further distance (d), which is unequal to the first distance, is formed between the two clamping faces (8, 9) of the side parts (2, 3).

2. Clamping device (1) according to claim 1, **characterised in that** the at least one spacer element (12) is arranged in the at least one further receiving position rotated by an angle about an axis of rotation (D) relative to the first receiving position.

3. Clamping device according to claim 2, **characterised in that** securing means (49) are provided in order to secure the at least one spacer element (12) in the respective receiving position against rotation about the axis of rotation (D).

4. Clamping device according to claim 2 or 3, **characterised in that** the axis of rotation (D) of the at least one spacer element (12) is parallel to the at least one screw axis (A).

5. Clamping device according to any one of claims 1 to 4, **characterised in that** one end face (15) of the at least one spacer element (12) is stepped, wherein the counter faces (16, 17, 18, 19) associated with the at least one spacer element (12) are arranged on the stepped end face (15).

6. Clamping device according to claim 5, **characterised in that** an end face (20) of the at least one spacer element (12) facing away from the stepped end face (15) is flat.

7. Clamping device according to any one of claims 1 to 6, **characterised in that** the at least one spacer element (12) is annular in shape.

8. Clamping device according to any one of claims 1 to 7, **characterised in that** the at least one spacer element (12) has a through-hole (13) through which the at least one screw (8) extends.

9. Clamping device according to any one of claims 1 to 8, **characterised in that** at least one of the two connecting portions (4, 5) of the side parts (2, 3) has at least one recess (22) with a stepped base (23), which comprises at least several of the support faces (25, 26, 27, 28).

10. Clamping device according to claim 9, **characterised in that** the base (23) of the at least one recess (22) is annular in shape and encloses an opening (31) for the at least one screw (8), the opening arranged concentrically to the at least one screw axis (A).

11. Clamping device according to claim 8 or 9, **characterised in that** the support faces (25, 26, 28, 28) associated with the base (23) of the at least one recess (22) are arranged distributed in the circumferential direction around the at least one screw axis (A).

12. Clamping device according to any one of claims 8 to 11, **characterised in that** the base (23) of the at least one recess (22) has a pattern which is repeated in the circumferential direction about the at least one screw axis (A), this pattern being repeated in particular three times.

13. Clamping device according to any one of claims 1 to 12, **characterised in that** the at least one spacer element (12) is supported in each of the receiving positions with at least a partial quantity of the counter faces (16, 17, 18, 19) on a partial quantity of the support faces (25, 26, 27, 28).

14. Clamping device according to any one of claims 1 to 13, **characterised in that** the number of support planes corresponds to the number of counter planes (L₁, L₂, L₃, L₄) or an integer multiple of the number of counter planes (L₁, L₂, L₃, L₄).

15. Clamping device according to any one of claims 1 to 14, **characterised in that** the clamping device (1) is a carriage for a sliding door, wherein a door leaf (41) is fixable in a suspended manner between the clamping faces (9, 10) of the side parts (2, 3).

## Revendications

1. Dispositif de serrage (1) pour un battant de porte (41) comportant
deux parties latérales (2, 3) avec des sections de liaison (4, 5), lesquelles sont reliées entre elles au moyen d'au moins une vis (8) présentant un axe de vis (A), et avec des sections de serrage (6, 7) présentant deux surfaces de serrage (9, 10) tournées l'une vers l'autre pour la réception par serrage du battant de porte (41), et
au moins un élément d'espacement (12) disposé entre les sections de liaison (4, 5) des parties latérales (2, 3), lequel est construit séparément des deux parties latérales (2, 3) et s'appuie sur celles-ci,
**caractérisé en ce que**
l'une au moins des deux sections de liaison (4, 5) des parties latérales (2, 3) présente plusieurs plans d'appui espacés les uns des autres le long de l'axe de vis (A), dans lequel au moins une surface d'appui (25, 26, 27, 28) s'étend dans chacun des plans d'appui, et
l'au moins un élément d'espacement (12) présente plusieurs contre-plans (L₁, L₂, L₃, L₄) espacés les uns des autres axialement le long de l'axe de vis (A), dans lequel au moins une contre-surface (16, 17, 18, 19) s'étend dans chacun des contre-plans (L₁, L₂, L₃, L₄),
dans lequel l'au moins un élément d'espacement (12) s'appuie avec l'une au moins des contre-surfaces (16, 17, 18, 19) sélectivement sur l'une au moins des surfaces d'appui (25, 26, 27, 28), de telle façon que l'au moins un élément d'espacement (12) est reçu dans une première position de réception, dans laquelle un premier espace (d) est formé entre les deux surfaces de serrage (9, 10) des parties latérales (2, 3), ou dans au moins une autre position de réception, dans laquelle un autre espace (d) est formé entre les deux surfaces de serrage (9, 10) des parties latérales (2, 3), lequel est différent du premier espace.

2. Dispositif de serrage (1) selon la revendication 1, **caractérisé en ce que** dans l'au moins une autre position de réception, l'au moins un élément d'espacement (12) est disposé de façon à être tourné selon un angle autour d'un axe de rotation (D) par rapport à la première position de réception.

3. Dispositif de serrage selon la revendication 2, **caractérisé en ce qu'**il est prévu des moyens de blocage (49) permettant de bloquer l'au moins un élément d'espacement (12) dans la position de réception respective contre une rotation autour de l'axe de rotation (D).

4. Dispositif de serrage selon la revendication 2 ou 3, **caractérisé en ce que** l'axe de rotation (D) de l'au moins un élément d'espacement (12) est parallèle à l'au moins un axe de vis (A).

5. Dispositif de serrage selon l'une des revendications 1 à 4, **caractérisé en ce qu'**un côté frontal (15) de l'au moins un élément d'espacement (12) est conçu de façon étagée, dans lequel les contre-surfaces (16, 17, 18, 19) attribuées à l'au moins un élément d'espacement (12) sont disposées sur le côté frontal (15) conçu de façon étagée.

6. Dispositif de serrage selon la revendication 5, **caractérisé en ce qu'**un côté frontal (20) de l'au moins un élément d'espacement (12) opposé au côté frontal (15) conçu de façon étagée est conçu de façon plane.

7. Dispositif de serrage selon l'une des revendications 1 à 6, **caractérisé en ce que** l'au moins un élément d'espacement (12) est conçu de façon annulaire.

8. Dispositif de serrage selon l'une des revendications 1 à 7, **caractérisé en ce que** l'au moins un élément d'espacement (12) présente un alésage traversant (13), à travers lequel s'étend l'au moins une vis (8).

9. Dispositif de serrage selon l'une des revendications 1 à 8, **caractérisé en ce que** l'une au moins des deux sections de liaison (4, 5) des parties latérales (2, 3) présente au moins un renfoncement (22) avec un fond étagé (23), lequel comporte au moins plusieurs des surfaces d'appui (25, 26, 27, 28).

10. Dispositif de serrage selon la revendication 9, **caractérisé en ce que** le fond (23) de l'au moins un renfoncement (22) est conçu de façon annulaire et entoure une ouverture (31) disposée de façon concentrique par rapport à l'au moins un axe de vis (A) pour l'au moins une vis (8).

11. Dispositif de serrage selon la revendication 8 ou 9, **caractérisé en ce que** les surfaces d'appui (25, 26, 27, 28) attribuées au fond (23) de l'au moins un renfoncement (22) sont disposées de façon à être réparties circonférentiellement autour de l'au moins un axe de vis (A).

12. Dispositif de serrage selon l'une des revendications 8 à 11, **caractérisé en ce que** le fond (23) de l'au moins un renfoncement (22) présente un motif se répétant circonférentiellement autour de l'au moins un axe de vis (A), dans lequel ce motif se répète en particulier trois fois.

13. Dispositif de serrage selon l'une des revendications 1 à 12, **caractérisé en ce que** dans chacune des positions de réception, l'au moins un élément d'espacement (12) s'appuie sur certaines des surfaces d'appui (25, 26, 27, 28) au moins avec certaines des contre-surfaces (16, 17, 18, 19).

14. Dispositif de serrage selon l'une des revendications 1 à 13, **caractérisé en ce que** le nombre de plans d'appui correspond au nombre de contre-plans (L₁, L₂, L₃, L₄) ou à un multiple entier du nombre de contre-plans (L₁, L₂, L₃, L₄) .

15. Dispositif de serrage selon l'une des revendications 1 à 14, **caractérisé en ce que** le dispositif de serrage (1) est un chariot pour une porte coulissante, dans lequel un battant de porte (41) peut être fixé de façon suspendue entre les surfaces de serrage (9, 10) des parties latérales (2, 3).
